# EUROPEAN PATENT SPECIFICATION

(11) **EP 1 262 700 B1**
(45) Date of publication and mention of the grant of the patent: **12.10.2005**
(21) Application number: 02010923.7
(22) Date of filing: 16.05.2002
(51) Int. Cl.: F16L 7/00

(54) **Modular spacing collar for pipes such as gas pipelines, oil pipelines, and the like**
Distanzhalter für Gas - oder Ölpipelines oder ähnliche Rohre
Elément distanceur pour des pipelines de gaz ou de pétrole et des tuyaux similaires

(30) Priority: 28.05.2001 IT MI20011123
(43) Date of publication of application: 04.12.2002
(73) Proprietor: Stampa Tecnica Articoli Materiali Plastici- S.T.A.M.P. S.P.A., Milano (IT)
(72) Inventor: Guerini, Carlo, 12 Milano (IT)
(74) Representative: Petruzziello, Aldo

(56) References cited:
- DE-C- 19 725 757
- US-A- 3 374 308
- US-A- 5 496 134

## Description

The present invention relates to the field of spacing collars or skid rings for pipes.

In the field, e.g. of gas pipes, gas mains, or gas pipelines, water pipelines, or the like, where a tube or pipe which forms the gas pipe or main has to pass, for example, under a road or other stretch of terrain that is particularly subject to mechanical stresses, it is common practice, and moreover required by current standards and regulations, that the said tube must be surrounded by another tube or pipe, which is generally also made of metal, designed to resist the said mechanical stresses. In order to avoid undesirable contacts and any transmission of current between the internal tube for gas flow and the mechanically resistant outer tube, a spacing ring or collar, or a set of spacing rings or collars made of insulating material are arranged around the inner tube at axial distances apart.

The aforesaid spacing collars or insulators are applied, set at axial distances apart, on a length of an internal tube or pipe, and the said tube, supported by the spacing collar, is slid or skidded inside the outer tube or jacket pipe to the desired position. The spacing collar thus acts also as an assembly means, and it is important that it should allow for excellent frictionless sliding.

The state of the art comprises various types of spacing collars. In a first type of spacing collars, which are made of insulating material, the items that make up the collar are joined together by metal bolts or metal clips or clamps. This does not guarantee insulation, in the case of failure, between the internal pipe and the protective jacket pipe, on account of the presence of "stray" metal items which might create electrical continuity by contact with the jacket pipe.

Other existing types of collars have a toothed pad as a closing system which can be adjusted by exerting a tensile force in a direction parallel to the circumference of the tube or pipe; clamping of the collar on the tube or pipe is determined by the pitch of the tooth, which in certain cases is not sufficient to guarantee perfect anchorage of the collar to the pipe. This may lead to problems of the collar sliding along the pipe and, hence, to an incorrect laying of the inner pipe inside the jacket pipe.

Italian patent IT 1.301.565 of the same applicant discloses a spacing collar for pipes which comprises one or more spacer elements and one or more joining and tightening elements. Each spacer element has a basic band which is relatively flexible and has spacing projections, and engagement means that are inclined in opposite directions and are equipped with retaining means. A joining and tightening element has inclined engagement parts, whereby it engages and fastens the engagement means of one and the same spacer element tightly closed in hoop-like fashion, or engages and fastens the engagement means of two contiguous spacer elements.

The prior spacing collar has enabled excellent results to be achieved on pipes of medium-sized and large-sized diameter, whereas, on pipes of small diameter, the inevitable lack of distancing projections in positions corresponding to the inclined engagement means renders their use far from suitable.

EP 0 625 663 and corresponding US 5 496 134 to Göhner teach a skid ring which comprises at least two segments or sections. Each segment has the shape of an arc of a circle, is slightly flexible, and has a portion provided with spacing projections or pads; a section set alongside the latter portion equipped with tabs, with grooves inclined with respect to the axis of the pipe; and a section, on the opposite side, formed as a closing part, with openings for insertion of the tabs, and a guide groove for a wedge. The prior skid ring also comprises a tension wedge and a fixing wedge, which are to be inserted into the guide groove and have grooves for co-operating with the inclined grooves of the tabs. The patent also provides a key for keeping the segments provisionally together whilst the wedges are being set in position.

The skid ring described above requires the use of at least two segments, and has the problem of leaving circumferential stretches without any pad-like projections, nor, on the other hand, can this problem be solved since, making hollow projections on an arched segment (i.e., projections directed according to divergent radiuses) would give rise to problems in the pressing stage, problems which are without any solution when the angle between the median radiuses for the end projections is large. Another drawback is represented by the fact that the ring assembly has a number of parts, and the laying of the segments in operation is relatively complex, as well as the fact that adaptation to pipes of very small or very large diameter is not optimal or, in some cases, is altogether impossible.

US 4.165.111 to Zanichelli teaches a collar for pipes which consists of a flexible band equipped with portions with closing teeth, which is wrapped around a pipe and closed on itself as a result of engagement of the teeth. It is, however, a somewhat complex operation to tighten the band, and the closing thereof is not sufficiently secure. US-A-3 374 308 discloses a conduit insulating modular spacer whose modules are snap-connected each other by inserting a tongue portion provided at one lateral side of a module into a grove, provided at the other lateral side of the adj acent module, whose shape is complementary to that of said tongue.

A purpose of the present invention is to overcome the prior art drawbacks.

In particular, the aims of the present invention are to provide a spacing collar or skid ring for pipes which will be suitable also for pipes of small diameter, which will enable a good support for the inner tube, which is sturdy and reliable, which can be produced at reasonable costs and conveniently assembled, and which can be made up either of a single element or of a number of elements.

The above purposes are achieved with a spacing collar as said in Claim 1. Further new and useful characteristics thereof are described in the subsequent claims.

In other words, the new spacing or skid ring, or insulator, comprises at least one spacer element or module made of flexible and elastic material, and a joining and tightening element. The module has a basic band, which is substantially plane in the absence of applied forces, and is equipped with pad-type spacing projections, and has one or more closing tabs, which extend from one side of the basic band, and one or more insertion openings or housings for tabs in the vicinity of the opposite side, the said closing tabs having a surface with tightening teeth and preferably a surface with retaining teeth, the housings for the tabs preferably having a knurled surface for engaging the respective tab during assembly. The openings for insertion of the tabs are made in the pad-type projections. The joining and tightening element is wedge-shaped and has a guide for engaging the tightening teeth of the tabs.

The new spacing collar of the invention achieves the predefined aims. Since it can be made with pad-like spacing projections also on the part thereof involved by closing of the module or engagement of an adjacent module, it does not present dangerous discontinuities of support. In addition, it is robust, easy to use, safe and secure, and can be adapted to internal tubes of a wide range of diameters. In addition, it makes it possible to slide an internal tube for long stretches inside an external jacket tube since, on account of the good arrangement of the pad-type projections, the wearing-out thereof is reduced.

Exemplary unrestrictive embodiment of the present invention will now be described in the following, reference being made to the attached drawings in which:
- Figure 1 is a top plan view of a first embodiment of an element or component module of the modular spacing collar, the said element being illustrated opened out flat;
- Figure 2 is a sectional view according to the plane indicated by 2-2 in Figure 1;
- Figure 3 is a sectional view according to the plane indicated by 3-3 in Figure 1;
- Figure 4 is a top plan view of a wedge-type joining and tightening element for the first embodiment;
- Figure 5 is a broken-away enlarged, right side view of Figure 4;
- Figure 6 is an enlarged cross sectional view taken along plane 6-6 in Figure 4;
- Figure 7 is a broken-away top plan view of two modules according to Figure 1, coupled and joined together with a wedge-type element;
- Figure 8 is a cross sectional view taken along plane 8-8 in Figure 7, but with the wedge-type element removed to obtain a clearer drawing;
- Figure 9 is a top plan view of a variant of a module according to a second, currently preferred embodiment;
- Figure 10 is a top plan view of a wedge for the module of Figure 9;
- Figure 11 is a cross sectional view taken along plane 11-11 in Figure 10;
- Figure 12 is a broken-away top plan view of two modules according to Figure 9 joined together with a wedge as in Figure 10.

According to the invention, a spacing collar or skid ring or insulator 10 for pipes, designed to be mounted on an internal tube or pipe which is to be slid inside and or kept at a distance from the internal wall of an external or jacket pipe, comprises at least one spacing element or module, referenced 20, and a clamping element or wedge referenced 30. Indicated by aT in the drawings is the direction of the axis of the tube on which the spacing collar is applied.

The module 20 comprises a basic band 21, which is substantially plane in the absence of applied forces and is flexible. Projecting from one face of the band are pad-type spacing projections 22. Coupling tabs 23 extend from one side 21a of the band 21. The spacing projections may be of any shape known in the field, and preferably they are of a shape having a rounded cross section and are elongated, in plan view, in the direction of the axis aT, as is illustrated in the figures, and can be configured with various heights with respect to the plane of the basic band, according to the radial distance that it is intended to keep between the internal tube and the external tube.

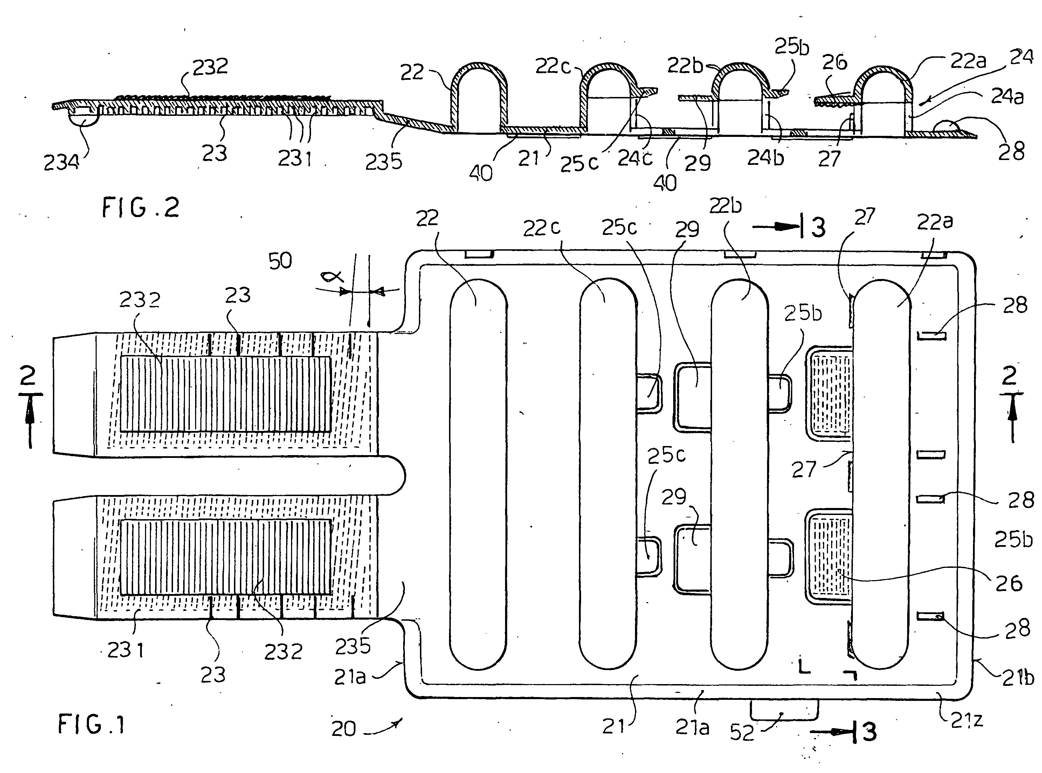

Even though the pad-type spacing projections are designated as a whole by the reference number 22, the spacing projections that are closest to the side 21b of the band opposite to the side 21a having the coupling tabs are designated more in particular by 22a, 22b, 22c. The aforesaid projections (which may vary in number) have, at their respective bases (see Figure 2), aligned openings designated by 24a (through opening), 24b (through opening), and 24c, which all together form a housing 24 for a tab. The openings and hence the housings 24 can number more than one for each projection and can be in a number equal to the number of the tabs to be received therein.

Preferably, the projections, or some of the projections have a guide strip on the side of each opening opposite to the basic band and on the mouth of each opening which faces the side 21b opposite to the tabs.

In the example illustrated in the figures, a guide strip 25b is shown on the projection 22b and a guide strip 25c on the projection 22c, both guide strips being provided with a chamfered edge on the face of the said strips that faces the basic band.

The projection 22a closest to the side 21b has toothed retention flanges 26 with retention teeth, the said flanges facing the surface of the basic band in positions corresponding to the openings. The said projection 22a has a reference wall 27, which extends according to a plane at right angles to the basic band 21 and at right angles (in the example illustrated in the figure) to the longitudinal axis of the tabs, the said reference wall 27 facing the projection 22b and extending on the solid parts between the openings, said reference surface being preferably toothed with retention teeth 27'. Preferably small ramps or protuberances 28, having a circular arc are provided on the face of the band 21, alongside the projection 22a, precisely between the projection 22a and the side 21b.

Preferably, the projection 22b has flanges 29 on the side opposite to the strips 25b.

Each tab 23 comprises a set of tightening teeth 231 on one face (the bottom face in Figure 2), generally the face opposite to the one contiguous to the face of the band 21 which carries the projections. Preferably each tab 23 further has a series of retention teeth 232 on the opposite face (the top one in figure 2). The tightening teeth 231 preferably have a rectangular cross section and are arranged parallel to one another. They may be parallel to the axis aT of the tube or else slightly inclined by an angle α with respect to the axis aT of the tube. The set of retention teeth 232 comprises teeth having a sawtooth shape transverse to the extension of the tabs and with the steeper face of each tooth facing the band 21. Each tab moreover preferably comprises an end pad 234, with rounded edges, to favour sliding of the tab. Between each tab and the band 21 there is provided an inclined plane 235 i.e., the tab is in a plane that is staggered with respect to the band 21.

The band 21 has a chamfered perimetral edge 21z. Preferably, it moreover has, on the face opposite to the one illustrated in Figure 1, anchoring ribs 40 for facilitating positioning of the band on the tube, and on the tabs there are provided reference indices 50 for closing. The band 21 further has a reference lug 52 for indicating the position for introduction of the wedge.

The tightening or clamping element 30 hereinafter referred to also as "wedge" or "nail", will be described in the following.

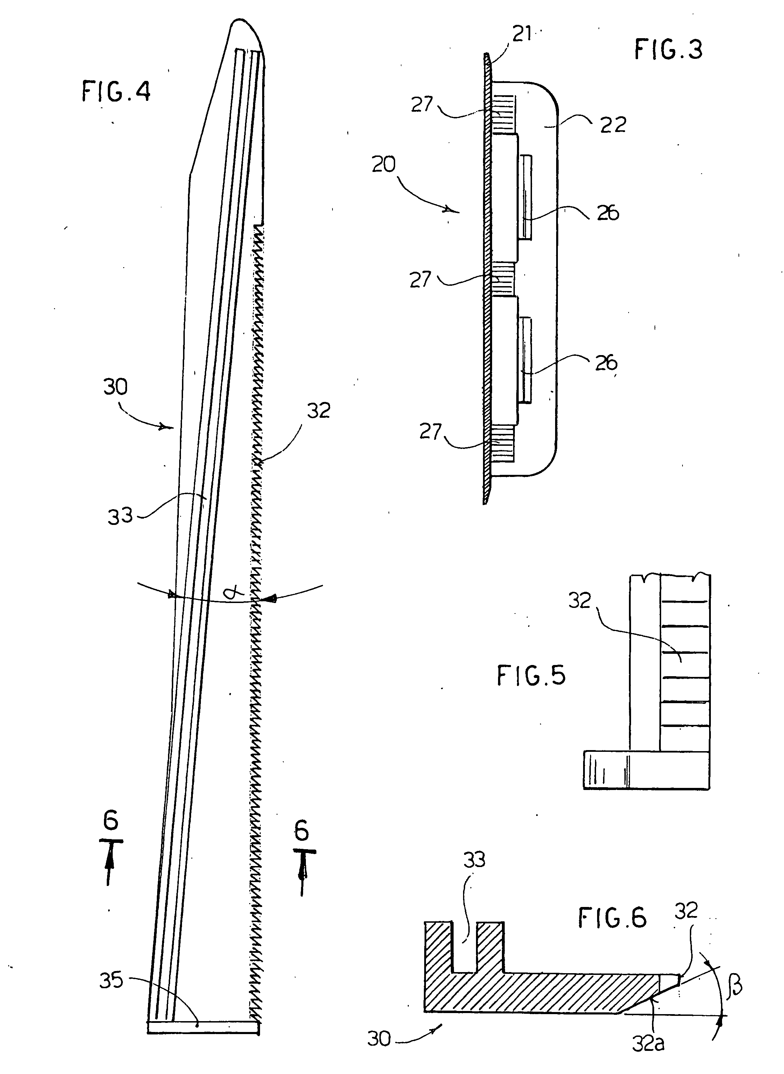

The wedge 30 has an elongated, tapered shape in plan view, and for a substantial portion of its length has a width that is smaller than the distance between two facing walls of the projection 22 of a module with which it is to co-operate. The wedge 30 has a reference wall 32, preferably but not necessarily toothed with retention teeth, on one of its larger sides, and a tightening guide 33, generally a guide groove. In the embodiment of Figure 4, the guide groove 33 is inclined with respect to the wall 32 and with respect to the axis aT by an angle α. The toothed wall 32 (where provided) is for engagement of the previously mentioned wall 27 having retention teeth (where provided). The guide groove 33 is for engagement of the tightening teeth 231 of the tabs and hence has the same angle (α = 0° - 45°) with respect to the axis aT, as the teeth 231 of the tabs. A possible blow wall 35 at the wider end has the function of enabling blows or a force to be applied for pushing the wedge into position. Preferably the wall 32 is tapered by an angle β, as may be seen in figure 6, in order to favour proper resting of the wedge on the surface of the band.

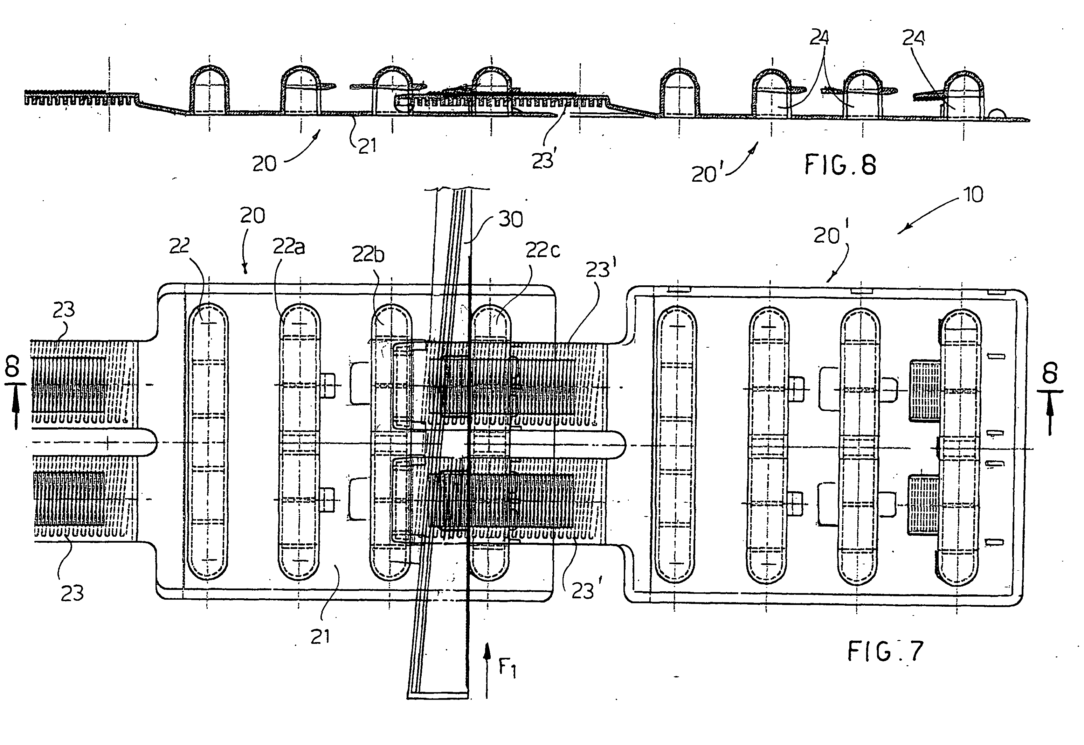

With reference to Figures 7 and 8, there now follows a description of the coupling-together of two modules 20, 20' by means of a wedge 30. What is said here equally applies to the closing, in loop fashion, of one and the same module of appropriate length or of a chain of modules coupled together.

The items of the module 20' are designated by the same reference numbers as those used for the corresponding items of the module 20 - marked with an apex -, and will not be described further hereinafter.

The tabs 23', 23' of the module 20' are inserted in the housings 24, 24 of the module 20, where they are retained by friction and/or by the engagement of their teeth 232' with the teeth of the flanges 26 of the module 20, against which they are pushed possibly by the protuberances 28.

A wedge 30 is introduced into the space delimited between the projection 22a and the projection 22b, the band 21 of one first module 20 and the tab/tabs 23' of a second module 20'. The wedge engages at least one tooth 231' of each tab 23' with its guide 33, and engages the toothed portions 27 of the module 20 with its toothed wall 32. When the wedge is pushed in the direction of the arrow F1, indicated in Figure 7 (i.e., in the direction of the axis of the tube aT), the wedge causes the tooth (or teeth) with which it is engaged and the wall 27 of the projection 12a to diverge, thus tightening the two modules together. Engagement is rendered stable by friction and/or by mutual engagement of teeth 232' and flange teeth 26 (where these teeth are present) and by mutual engagement of the teeth of the walls 32 and 27 (where these teeth are present).

By appropriately modifying the angle α of the wedge or the width dimension of the wedge - and the distance between the projections -, a different tightening is obtained, with more or less fine adjustment, and hence with a greater or lesser rate of tightening.

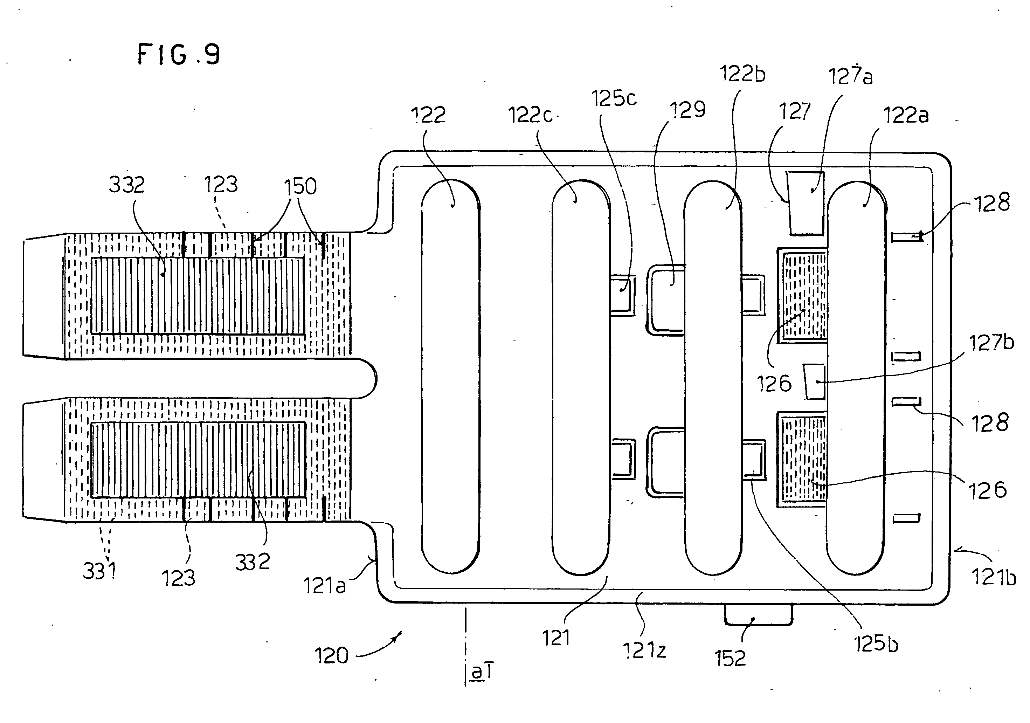

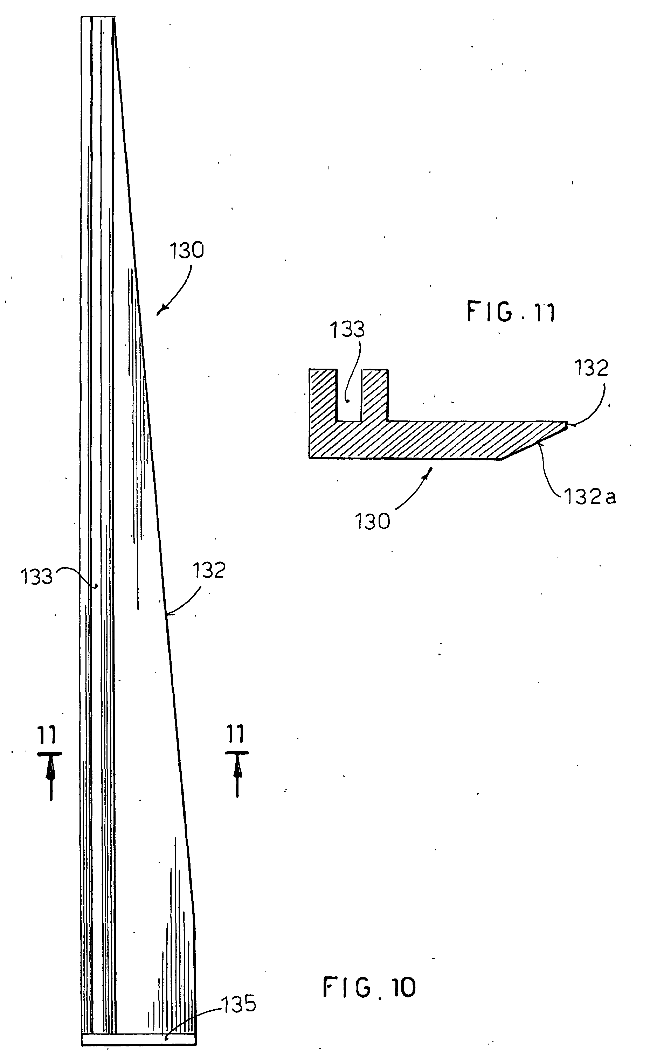

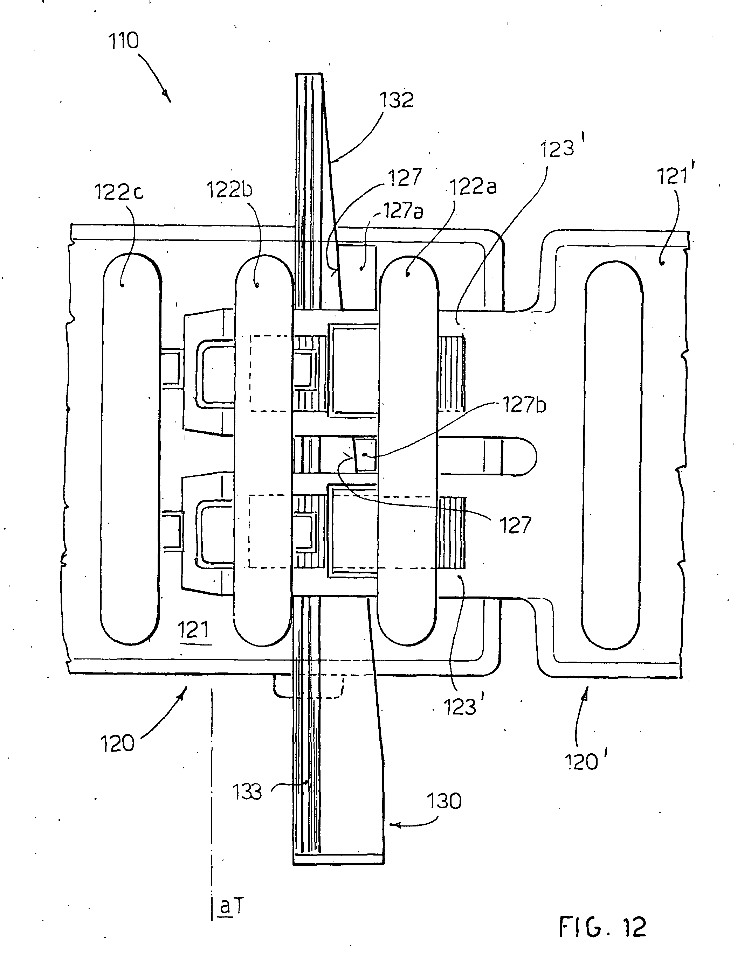

A currently preferred embodiment is illustrated in Figures 9 to 12, in which elements corresponding to those of the previous embodiment bear the same reference numbers increased by 100. Where these elements are not described in detail in what follows, the description of the corresponding elements of Figures 1 to 8 applies.

The spacing collar or skid ring 110 comprises at least one spacing element or module referenced 120, and a clamping element or wedge, referenced 130. The direction of the axis of the tube on which the ring is to be applied is designated by aT.

The module 120 comprises a substantially plane and flexible band 121. Pad-type spacing projections 122 project from one face of said band. Coupling tabs 123 extend from one side 121a of the band. The pad-type spacing projections may be of any shape, as has been mentioned previously with reference to the first embodiment.

The spacing projections that are closest to the side 121b of the band, opposite to the side 121a having the coupling tabs, are referenced 122a, 122b, 122 in detail. The said projections (which may vary in number, and may not necessarily be three as illustrated in the figures) have, at their respective bases, aligned openings designated by 124a (through opening), 124b (through opening), and 124c, which all together form a housing 124 for a tab. The openings and hence the housings 124 can be more than one for each projection and can be in a number equal to the number of the tabs to be received therein.

Preferably, the projections, or some of the projections have a guide strip on the side of each opening opposite to the basic band and on the mouth of the openings which faces the side 121b opposite to the tabs.

In the example illustrated in the figures, guide strips are designated by 125b on the projection 122b and 125c on the projection 122c, each guide strip being provided with a chamfered or bevelled edge on the face of the said strips that faces the basic band.

The projection 122a closest to the side 121b has toothed retention parts or flanges 126, with retention teeth, the said flanges facing the surface of the basic band in positions corresponding to the openings. In the vicinity of the said projection 122a, there is provided a reference wall 127, which extends according to a plane orthogonal to the basic band 121, oblique (in the example illustrated in the figure) with respect to the longitudinal axis of the tabs, the said reference wall 127 facing the projection 122b. The reference wall 127 may be provided by one or more projecting elements 127a, 127b. Preferably small ramps or protuberances 128 are provided at the side of the projection 122a, precisely between the projection 122a and the side 121b. Preferably, a reference lug 152 is provided to indicate the position in which the wedge or tightening means is to be inserted.

Preferably, the projection 122b has flanges 129 on the side opposite to the strips 125b.

Each tab 123 comprises a set of tightening teeth 331 (drawn dashed) on the face opposite to the one illustrated in Figure 9. Preferably, each tab 23 further has a series of retention teeth 332 on the face shown in Figure 9. The tightening teeth 331 have a rectangular cross section and are arranged parallel to one another and parallel to the axis aT of the tube. The set of retention teeth 332 comprises teeth having a sawtooth shape and extending transverse to the extension of the tabs and with the steeper face of each tooth facing the band 121. Each tab preferably further comprises an end pad (not illustrated), corresponding to the end pad 234 of the previous embodiment, as well as reference indices 150 for providing a visual indication of tightening. Each tab is in a plane that is staggered with respect to the band 121.

The band 121 has a bevelled perimetral edge 121z. Further it preferably has anchoring ribs on the face opposite to the one illustrated in Figure 9, for facilitating positioning of the band on the tube.

The tightening nail or wedge 130 will be described in the following.

The wedge 130 has an elongated, tapered, shape in plan view, and for a substantial portion of its length has a width that is smaller than the distance between two facing walls of the projections 122 of a module with which it is to co-operate. The wedge 130 has a reference wall 132, which is preferably smooth, but possibly toothed, on one of the larger sides, and a tightening groove 133 parallel to the axis aT of the tube. The reference wall 132, where provided, is for engagement of the aforesaid oblique wall 127 of the module, whilst the groove 133 is for engagement of the tightening teeth 331. A bevel or chamfer 132a is provided along the wall 132 to cause the wedge to rest on the surface of the band 121. A possible blow wall 135 at the wider end of the wedge has the function of enabling blows or a force to be applied for pushing the wedge into position.

The wedge 130 is introduced into the space delimited between the projection 122a and the projection 122b, the band121 of one first module 120 and the tab/tabs 123' of a second module 120'. The wedge engages at least one tightening tooth of each tab 123' with its groove 133. When the wedge is pushed in the direction of the axis of the tube aT, the wedge causes the tooth (or teeth) with which it is engaged and the wall 127 to diverge, thus tightening the two modules together. Engagement is rendered stable by friction and/or by mutual engagement of teeth 332' and the teeth of the flanges 126 (where these teeth are present).

Variations to what is described herein are possible, and it is understood that the possible variants in the reach of a person skilled in the field all fall within the scope of the present patent application.

## Claims

1. A modular spacing collar for pipes comprising at least one module (20; 120) and a tightening element (30; 130), the module comprising a basic band (21; 121) made of a flexible material, at least two spacing projection (22; 122), at least one tab (23; 123) extending from one side of the basic band and at least one housing (24; 124) for receiving a tab in the vicinity of the side opposite to the basic band, said at least one tab being provided with tightening teeth (231; 331) on one face thereof, said tightening element (30; 130) comprising means (33; 133) for engaging said tightening teeth of the tab and forcing them into a tightening position,
said basic band (21, 121) is made of flexible material, and said at least one tab (23, 123) is at right angle with respect to the axis (aT) of the pipe, **characterized in that** said housing (24; 124) for a tab is made at least in part in at least one spacing projection (22; 122) and comprises coaxial through openings (24a, 24b; 124a, 124b) realised in contiguous spacing projections (22, 122).

2. A spacing collar as said in Claim 1, **characterized in that** it further comprises first retaining means (26, 232; 126, 332) in a position corresponding to said housing and on said tab/tabs and/or second retaining means (27, 32) on said module and on said tightening element to prevent loosening of same; and/or protuberances (28; 128) between the external projections (22a; 122a) and the side of the band.

3. A spacing collar as said in Claim 1, **characterized in that** said tightening teeth (331) extend in a direction which, in operation, is parallel to the direction of the axis (aT) of the tube on which the spacing ring is mounted.

4. A spacing collar as said in Claim 3, **characterized in that** the tightening element (30; 130) is wedge-shaped, with a reference surface (32; 132) on one side and a guide means (33; 133) for the tightening teeth of the tab on one face; and the basic band (21; 121) of the module has a reference surface (27; 127) for co-operating with the reference surface of the tightening element.

5. A spacing collar as said in Claim 4, **characterized in that** the reference surface (32) of the tightening element is toothed with retention teeth, and the reference surface (27) of the band is toothed with retention teeth (27'), said toothed reference surfaces being for mutual engagement.

6. A spacing collar as said in Claim 2, **characterized in that** said retaining means comprise retaining teeth (232) on the surface of said at least one tab (23), which is opposite to the surface provided with tightening teeth, and retaining teeth on a flange (26) extending above said housing.

7. A spacing collar according to Claim 4, **characterized in that** the tightening element has the guide means (133) in the form of a projection or groove which, in operation, is parallel to the axis of the tube (aT) on which the spacing collar is mounted.

8. A spacing collar as said in Claim 4, **characterized in that** the tightening element (30; 130) has a chamfer (32a; 132a) in a position corresponding to the side with the reference surface (32; 132).

9. A spacing collar as said in Claim 4, **characterized in that** the tightening element (30; 130) has a tail provided with a blow surface (35; 135).

10. A spacing collar as said in Claim 1, **characterized in that** the tabs have reference indices (50; 150) for closing, on the surfaces thereof opposite to the tightening teeth.

11. A spacing collar as claimed in Claim 1, **characterized in that** the band has a reference lug (52; 152) for identifying the position for the tightening element.

12. A spacing collar as said in Claim 1, **characterized in that** the tightening teeth of the tabs and the tightening means of the tightening element have a same angle α with respect to the direction of the axis of the tube on which the tabs are applied, with α = 0° to 45°.

## Patentansprüche

1. Eine modulare Abstandshülse für Rohre, die jeweils mindestens ein Modul (20, 120) und ein Spannelement (30, 130) umfasst, wobei das Modul einen Grundring (21, 121) umfasst, der aus flexiblem Material besteht, mindestens zwei Abstandsvosprünge (22, 122), mindestens eine Zunge (23, 123), welche sich von einer Seite des Grundrings erstreckt, und mindestens ein Gehäuse (24, 124) zur Aufnahme einer Zunge in der Nähe der Seite, die dem Grundring gegenüber liegt, wobei die genannte mindestens eine Zunge mit Spannzähnen (231, 331) an deren einer Seite ausgestattet ist, und das genannten Spannelement (30, 130) Elemente (33, 133) zum Einrasten der genannten Spannzähne der Zunge sowie dazu, diese in eine gespannte Stellung zu zwingen, aufweist, wobei der genannte Grundring (21, 121) aus flexiblem Material besteht, und die genannte mindestens eine Zunge (23, 123) sich im rechten Winkel im Verhältnis zu der Achse (aT) des Rohrs befindet, **dadurch gekennzeichnet, dass** das genannte Gehäuse (24, 124) für eine Zunge zumindest teilweise in mindestens einem Abstandsvorsprung (22, 122) gewonnen wird und koaxiale durchgehende Öffnungen (24a, 24b, 124a, 124b) umfasst, die in anliegenden Abstandsvorsprüngen (22, 122) liegen.

2. Eine Abstandshülse wie in Anspruch 1 erwähnt, **dadurch gekennzeichnet, dass** sie des weiteren erste Rückhaltelemente (26, 232, 126, 332) in einer Stellung umfasst, die dem genannten Gehäuse entspricht, und an der/den genannten Zunge/n und/oder zweiten Rückhalteelementen (27, 32) auf dem genannten Modul und auf dem genannten Spannelement, um eine Lockerung desselben zu verhindern; und/oder Ausstülpungen (28, 128) zwischen den äußeren Vorsprüngen (22a, 122a) und der Seite des Rings.

3. Eine Abstandshülse wie in Anspruch 1 erwähnt, **dadurch gekennzeichnet, dass** die genannten Spannzähnen (331) sich in eine Richtung erstrecken, die im Betrieb parallel zu der Richtung der Achse (aT) des Rohrs ist, auf dem der Abstandsring montiert ist.

4. Ein Abstandsring wie in Anspruch 3 erwähnt, **dadurch gekennzeichnet, dass** das Spannelement (30, 130) keilförmig ist, mit einer Bezugsfläche (32, 132) an einer Seite und einem Führungselement (33, 133) für die Spannzähnen der Zunge an einer Front; und der Grundring (21, 121) des Moduls eine Bezugsfläche (27, 127) zum Zusammenwirken mit der Bezugsfläche des Spannelements aufweist.

5. Eine Abstandshülse wie in Anspruch 4 erwähnt, **dadurch gekennzeichnet, dass** die Bezugsfläche (32) des Spannelements mit Rückhaltezähnen gezahnt ist, und dass die Bezugsfläche (27) des Rings mit Rückhaltezähnen (27') gezahnt ist, wobei die genannten gezahnten Oberflächen jeweils der gegenseitigen Einrastung dienen.

6. Eine Abstandshülse wie in Anspruch 2 erwähnt, **dadurch gekennzeichnet, dass** die genannten Rückhalteelemente jeweils Rückhaltezähne (232) auf der Oberfläche an genannter mindestens einer Zunge (23) umfassen, welche der Oberfläche gegenüberliegt, die mit Spannzähnen ausgerüstet ist, sowie Rückhaltezähne an einem Flansch (26), der sich über dem genannten Gehäuse erstreckt.

7. Eine Abstandshülse gemäß Anspruch 4, **dadurch gekennzeichnet, dass** das Spannelement ein Führungselement (133) in Form eines Vorsprungs oder einer Rille aufweist, das bei Betrieb parallel zu der Achse des Rohrs (aT) verläuft, an dem die Abstandshülse montiert ist.

8. Eine Abstandshülse wie in Anspruch 4 erwähnt, **dadurch gekennzeichnet, dass** das Spannelement (30, 130) eine Schräge (32a, 132a) in einer Stellung aufweist, die der Seite mit der Bezugsfläche (32, 132) entspricht.

9. Eine Abstandshülse wie in Anspruch 4 erwähnt, **dadurch gekennzeichnet, dass** das Spannelement (30, 130) ein Endstück aufweist, das mit einer Stoßfläche (35, 135) ausgestattet ist.

10. Eine Abstandshülse wie in Anspruch 1 erwähnt, **dadurch gekennzeichnet, dass** die Zungen Bezugsmarkierungen (50, 150) zum Schließen aufweisen, und zwar an deren Oberfläche gegenüber den Spannzähnen.

11. Eine Abstandshülse wie in Anspruch 1 erwähnt, **dadurch gekennzeichnet**, das der Ring einen Bezugsansatz (52, 152) zur entsprechenden Bestimmung der Stellung für das Spannelement aufweist.

12. Eine Abstandshülse wie in Anspruch 1 erwähnt, **dadurch gekennzeichnet, dass** die Spannzähne der Zungen und die Spannmittel des Spannelements jeweils denselben Winkel α im Verhältnis zu der Richtung der Achse des Rohrs aufweisen, an dem die Zungen angebracht sind, wobei α = 0° bis 45° ist.

## Revendications

1. Bague d'espacement modulaire pour tuyaux comprenant au moins un module (20; 120) et un élément de resserrement (30; 130), le module comprenant une bande de base (21; 121) réalisée dans une matière flexible, au moins deux projections d'espacement (22; 122), au moins une patte (23; 123) s'étendant d'un côté de la bande de base et au moins un logement (24; 124) pour accueillir une patte à proximité du côté opposé à la bande de base, ladite au moins une patte étant pourvue de dents de resserrement (231; 331) sur une face de celle-ci, ledit élément de resserrement (30; 130) comprenant des dispositifs (33; 133) pour engager lesdites dents de resserrement de la patte et les forcer dans une position de resserrement, ladite bande de base (21, 121) est réalisée dans une matière flexible et ladite au moins une patte (23, 123) est à angle droit par rapport à l'axe (aT) du tuyau, **caractérisée en ce que** ledit logement (24; 124) pour une patte est réalisé au moins en partie dans au moins une projection d'espacement (22; 122) et comprend des ouvertures de passage coaxiales (24a, 24b; 124a, 124b) réalisées dans des projections d'espacement contiguës (22, 122).

2. Bague d'espacement selon la revendication 1, **caractérisée en ce qu'**elle comprend également des premiers dispositifs de retenue (26, 232; 126, 332) dans une position correspondant audit logement et sur ladite/lesdites patte/pattes et/ou les deuxièmes dispositifs de retenue (27, 32) sur ledit module et sur ledit élément de resserrement pour éviter le desserrement de ceux-ci ; et/ou des protubérances (28; 128) entre les projections extérieures (22a; 122a) et le côté de la bande.

3. Bague d'espacement selon la revendication 1, **caractérisée en ce que** lesdites dents de resserrement (331) s'étendent dans une direction qui, en phase opérationnelle, est parallèle à la direction de l'axe (aT) du tuyau sur lequel la bague d'espacement est montée.

4. Bague d'espacement selon la revendication 3, **caractérisée en ce que** l'élément de resserrement (30; 130) a la forme d'un coin, avec une surface de référence (32; 132) sur un côté et un dispositif de guidage (33; 133) pour les dents de resserrement de la patte sur une face ; et la bande de base (21; 121) du module présente une surface de référence (27; 127) pour coopérer avec la surface de référence de l'élément de resserrement.

5. Bague d'espacement selon la revendication 4, **caractérisée en ce que** la surface de référence (32) de l'élément de resserrement est dentée avec des dents de retenue, et la surface de référence (27) de la bande est dentée avec des dents de retenue (27'), lesdites surfaces de référence dentées étant pour l'engagement mutuel.

6. Bague d'espacement selon la revendication 2, **caractérisée en ce que** lesdits dispositifs de retenue comprennent des dents de retenue (232) sur la surface de ladite au moins une patte (23), qui est opposée à la surface pourvue de dents de resserrement, et des dents de retenue sur une bride (26) s'étendant au-dessus dudit logement.

7. Bague d'espacement selon la revendication 4, **caractérisée en ce que** l'élément de resserrement présente des dispositifs de guidage (133) sous la forme d'une projection ou d'une glissière qui, en phase opérationnelle, est parallèle à l'axe du tuyau (aT) sur lequel la bague d'espacement est montée.

8. Bague d'espacement selon la revendication 4, **caractérisée en ce que** l'élément de resserrement (30; 130) présente un chanfrein (32a; 132a) dans une position correspondant au côté avec la surface de référence (32; 132).

9. Bague d'espacement selon la revendication 4, **caractérisée en ce que** l'élément de resserrement (30; 130) présente une queue pourvue d'une surface à soufflet (35; 135).

10. Bague d'espacement selon la revendication 1, **caractérisée en ce que** lesdites pattes présentent des indices de référence (50 ; 150) pour la fermeture, sur les surfaces de celles-ci opposées aux dents de resserrement.

11. Bague d'espacement selon la revendication 1, **caractérisée en ce que** la bande présente une oreille de référence (52; 152) pour l'identification de la position de l'élément de resserrement.

12. Bague d'espacement selon la revendication 1, **caractérisée en ce que** lesdites dents de resserrement des pattes et les dispositifs de resserrement de l'élément de resserrement présentent un même angle α par rapport à la direction de l'axe du tuyau sur lequel les pattes sont appliquées, avec α= 0° à 45°.
